# EUROPÄISCHE PATENTANMELDUNG

(11) **EP 0 909 080 A2**
(43) Veröffentlichungstag der Anmeldung: **14.04.1999**
(21) Anmeldenummer: 98117716.5
(22) Anmeldetag: 18.09.1998
(51) Int. Cl.: H04M 3/44, H04M 3/42, H04Q 3/42, H04M 3/38

(54) **Vorrichtung und Verfahren zur Fernabfrage individuell gespeicherter Rufnummern**

(30) Priorität: 08.10.1997 DE 19744370
(71) Anmelder: Deutsche Telekom AG, 53113 Bonn (DE)
(72) Erfinder: Naumburger, Volkmar Dr.-Ing., 15537 Erkner (DE)

(57) **Zusammenfassung**

Die Erfindung betrifft eine Vorrichtung sowie ein Verfahren zur Fernabfrage individuell gespeicherter Rufnummern über ein Telefonnetz mit einer Sprech- und Wähleinrichtung (2) und daran angeschlossener Spracherkennungseinheit (9), welche vorbestimmte Schlüsselwörter gesprochener Sprache zu erkennen imstande ist. Die Vorrichtung gibt, kontrolliert durch eine Ablaufsteuerung (10), in Abhängigkeit vom erkannten Schlüsselwort Daten, insbesondere Rufnummern, aus einem Speicher (8) zur Fernabfrage frei bzw. nimmt eine Abfrage der in dem Speicher (8) dem Schlüsselwort zugeordneten Daten vor, wobei die mit einem Schlüsselwort assoziierten Daten vom Speicher (8) der Ablaufsteuerung (10) übergeben werden und die Ablaufsteuerung (10) die Umwandlung der abgefragten Daten in ein Sprachsignal mittels im Sprachbausteinspeicher (4) in Sprachprompts hinterlegter, einzelnen Datenkomponenten, wie z.B. einzelnen Ziffern, zugeordneter Sprachelemente veranlaßt, das durch die Sprech- und Wähleinrichtung (2) über das Telefonnetz an den Benutzer ausgegeben wird.

## Beschreibung

Die Erfindung betrifft eine Vorrichtung sowie ein Verfahren zur Fernabfrage individuell gespeicherter Rufnummern.

Die moderne Telekommunikation beruht auf der Herstellung von Verbindungen zwischen Partnern, denen eindeutige Rufnummern zugeordnet sind. Anstelle der Namen der Partner müssen also Ziffernfolgen zum Herstellen einer Verbindung verwendet werden. Mit der Einführung von Telekommunikations-Endgeräten mit Speichern zum individuellen Ablegen von Rufnummern unter einem Namen oder unter speziellen Tasten, insbesondere aber seit Einführung der Sprachnamenwahl wird dieser Umweg für den Nutzer mehr oder weniger überflüssig gemacht. Dennoch sind die meisten Endeinrichtungen auf das direkte Wählen von Rufnummern, d.h. der unmittelbaren Eingabe einer Ziffernfolge, angewiesen. Der Benutzer von Endeinrichtungen ist also gezwungen, sich auf die eine oder andere Art Rufnummern zu merken. Dafür gibt es eine Reihe von Mitteln, die das Merken vereinfachen. Die Palette derartiger Hilfsmittel reicht von einem persönlichen Telefonbuch, über öffentliche Telefonbücher bis zu PC-gestützten Lösungen. Eine andere Alternative ist die gebührenpflichtige Inanspruchnahme von Informationsdienstleistungen.

Alle Hilfsmittel zum Merken von Rufnummern, ausgenommen die Endeinrichtungen mit Sprachnamenwahl, sind entweder ortsfest oder müssen als zusätzliche Einrichtung beim Nutzer verfügbar sein. Damit wird die Bewegungsfreiheit für den Nutzer von Endeinrichtungen in einem gewissen Maße eingeschränkt. Nachteilig sind auch die zum Teil erheblichen Kosten für spezielle Einrichtungen, wie Datenbankrechner o.ä.. Der gleiche Nachteil betrifft auch die Inanspruchnahme von Informationsdiensten.

Endeinrichtungen mit Sprachnamenwahl verfügen über eine technische Grundausstattung, die das Wählen ohne Zuhilfenahme einer Rufnummer am Endgerät selbst ermöglichen. Allerdings ist die Benutzung der Sprachnamenwahl aus der Ferne zum Zwecke des Herstellens einer Verbindung nicht möglich.

Der Erfindung liegt daher die Aufgabe zugrunde ein Verfahren sowie eine Vorrichtung zur Fernabfrage von Rufnummern zur Verfügung zu stellen, welches kostengünstig ist und dem Benutzer größtmögliche räumliche Flexibilität ermöglicht.

Die Aufgabe wird gelöst durch eine Vorrichtung zur Fernabfrage individuell gespeicherter Rufnummern über ein Telefonnetz mit einer Sprech- und Wähleinrichtung und daran angeschlossener Spracherkennungseinheit, welche vorbestimmte Schlüsselwörter gesprochener Sprache zu erkennen imstande ist, die mit weiteren, dem Schlüsselwort zugeordneten Daten in einem Speicher abgelegt sind, wobei die Vorrichtung, kontrolliert durch eine Ablaufsteuerung, in Abhängigkeit vom erkannten Schlüsselwort Daten aus dem Speicher zur Fernabfrage freigibt bzw. eine Abfrage der in dem Speicher dem Schlüsselwort zugeordneten Daten vornimmt, wobei die mit dem Schlüsselwort assoziierten Daten vom Speicher der Ablaufsteuerung übergeben werden und die Vorrichtung weiterhin einen Sprachbausteinspeicher aufweist, in welchem einzelnen Datenkomponenten, wie z.B. einzelnen Ziffern, zugeordnete Sprachelemente in Sprachprompts hinterlegt sind, wobei die Ablaufsteuerung die Umwandlung der abgefragten Daten in ein Sprachsignal durch entsprechende Kombination der Sprachelemente veranlaßt und das Sprachsignal durch die Sprech- und Wähleinrichtung über das Telefonnetz ausgegeben wird.

Die Aufgabe wird weiterhin gelöst durch ein Verfahren zur Fernabfrage individuell gespeicherter Rufnummern über ein Telefonnetz, wobei mittels einer Spracherkennungseinheit aus einer Spracheingabe eines entfernten Benutzers Namen von Teilnehmern als vorbestimmte, benutzerdefinierte Schlüsselwörter erkannt und in digitale Information umgewandelt werden, mit dieser Information assoziierte Daten, die Rufnummern des Endgeräts des Teilnehmers, aus einem lokalen Speicher entnommen, in ein Sprachsignal umgewandelt und dem entfernten Benutzer über das Telefonnetz akustisch übermittelt werden.

Das dem Benutzer übermittelte Sprachsignal besteht aus einzelnen Sprachelementen, welche jeweils einer Ziffer entsprechen. Somit wird nur ein minimaler Speicherplatz für diese Ansagetextbausteine benötigt.

Vorzugsweise ist die erfindungsgemäße Vorrichtung in ein Telefon, insbesondere ein Telefon mit automatischer Sprachnamenwahl implementiert. Dies hat den Vorteil, daß in dem Telefon bereits eine Spracherkennungseinheit sowie ein Speicher, in welchem die Namen von Teilnehmern und die mit ihnen assoziierten Rufnummern abgespeichert sind, vorhanden ist und gemeinsam genutzt werden kann.

Die Vorrichtung kann weiterhin auch in das Telefonnetz verlagert sein, z.B. im Netzknoten oder in einer Vermittlungsstelle realisiert ist. Dies hat den Vorteil, daß dieselbe technische Einrichtung, bestehend aus Ablaufsteuerung, Spracherkennungseinheit, Speicher für individuelle Daten sowie Speicher für Sprachelemente, von mehreren Teilnehmern gemeinsam genutzt werden kann und somit für den einzelnen kostengünstiger ist. Jedem Teilnehmer kann ein Teil des Speichers für sein individuelles Rufnummern-Namensverzeichnis zur Verfügung gestellt werden, welches der Teilnehmer einrichten und darauf zugreifen kann.

Die Spracherkennungseinheit ist imstande, vorbestimmte, teilweise benutzerdefinierte Schlüsselwörter aus der gesprochenen Sprache zu erkennen. Diese können zum einen Kommandos zur Steuerung der Fernabfrage oder ein persönlicher Benutzercode, zum anderen Namen von Teilnehmern sein, deren Telefonnummer fernabgefragt werden soll.

Vorzugsweise nimmt die Ablaufsteuerung, die einen Mikroprozessor enthält, eine akustische Benutzerführung mittels im Sprachbausteinspeicher hinterlegter Ansagetextbausteine vor. Gesteuert wird sie durch Sprach- oder Tastatureingaben seitens des Benutzers.

Vorzugsweise wird der Benutzer zunächst zur Eingabe eines Benutzercodes (PIN-Codes) aufgefordert, welcher von einer PIN-Speicher- und Vergleichseinheit analysiert wird. Stimmt der eingegebene Code mit einem intern in der Vorrichtung, d.h. im PIN-Speicher hinterlegten Code überein, so gibt die Ablaufsteuerung den Abfrageweg frei. Der Benutzer kann nun akustisch Namen von Teilnehmern eingeben, deren Rufnummer er mitgeteilt haben möchte.

Nach der Eingabe und Umwandlung eines gesprochenen Schlüsselworts in digitale Information werden die mit dieser Information assoziierten Daten aus dem Speicher entnommen und der Ablaufsteuerung übergeben. Die Ablaufsteuerung veranlaßt dann die Ausgabe von im Sprachbausteinspeicher hinterlegter einzelner Sprachelemente, die einzelnen Datenkomponenten wie z.B. einzelnen Ziffern zugeordnet sind, durch die Sprech- und Wähleinrichtung. So wird dem Benutzer beispielsweise automatisch die gewünschte Telefonnummer vorgelesen.

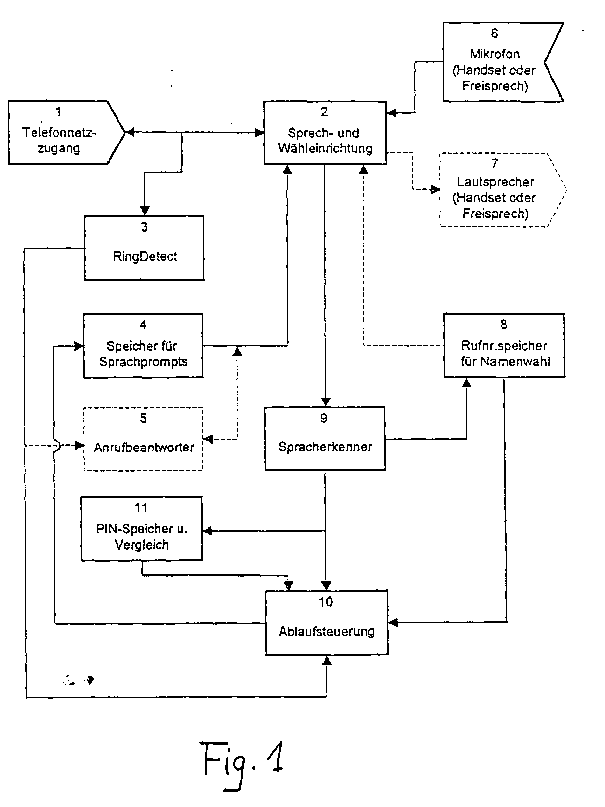

Die Erfindung wird nachfolgend an einem Ausführungsbeispiel erläutert. Figur 1 zeigt ein Blockdiagramm der erfindungsgemäßen Vorrichtung, die in ein Telekommunikations-Endgerät, z.B. ein Telefon mit Sprachnamenwahl, integriert ist. Alle Komponenten der Endeinrichtung, die zur Realisierung der erfindungsgemäßen Lösung nicht direkt benötigt werden, sind mittels gestrichelter Linien dargestellt.

Die Benutzung der Vorrichtung setzt voraus, daß über die Mittel der Endeinrichtung das Anlegen des individuellen Telefonbuchs zur Sprachnamenwahl bereits erfolgt ist. Dieser Vorgang wird allgemein als Training des Spracherkenners bezeichnet und erfolgt über das Mikrofon 6 der Endeinrichtung. Während des Namenstrainings wird die zum jeweiligen Namen assoziierte Rufnummer entweder über die Tastatur der Endeinrichtung oder aber auch per Spracherkennung eingegeben. Im Rufnummernspeicher 8 für die Namenwahl liegen somit Rufnummer und Name stets paarweise gespeichert vor.

Im Falle eines Anrufs wird das vom Netz über den Netzzugang 1 kommende Rufsignal in der Rufauswerteschaltung 3 erkannt. Nimmt der gerufene Teilnehmer den Ruf an, arbeitet die Endeinrichtung wie ein gewöhnliches Telefon. Andernfalls wird wie im Falle eines Anrufbeantworters nach Ablauf einer vordefinierten Anzahl von Rufen die Verbindung durch die Endeinrichtung automatisch hergestellt. Um nun zu unterscheiden, ob z.B. die Fernabfrage des Anrufbeantworters oder eine Rufnummer gewünscht wird, muß der Nutzer am fernen Teilnehmeranschluß ein entsprechendes Sprachkommando eingeben (z.B. "Anrufbeantworter", "Fernabfrage" u.s.w.). Dieses Sprachkommando wird von der Spracherkennungseinheit 9 erkannt, die über die Sprech- und Wähleinrichtung 2 an das vom Netzzugang 1 kommende Sprachsignal angekoppelt ist. Das Erkennungsergebnis liefert der Spracherkenner 9 an die Ablaufsteuerung 10, die die entsprechenden Signalwege, im vorliegenden Fall zur Fernabfrage der Rufnummer, schaltet.

Der ferne Teilnehmer wird über einen sprachlichen Dialog geführt, dessen Elemente im Speicher für Sprachprompts 4 abgelegt sind. Die Auswahl der erforderlichen Sprachelemente wird ebenfalls durch die Ablaufsteuerung 10 vorgenommen.

Bevor die Fernabfrage zugelassen wird, muß sich der Nutzer durch die Eingabe eines Benutzercodes (PIN) als berechtigt ausweisen. Die Überprüfung der PIN erfolgt in der PIN-Speicher- und Prüfeinrichtung 11. Das Resultat der Überprüfung geht an die Ablaufsteuerung 10, die im Negativfall die weitere Bearbeitung der Fernabfrage verhindert.

Die eigentliche Fernabfrage erfolgt nach einer Aufforderung an den fernen Nutzer zur sprachlichen Eingabe des gewünschten Namens. Der Spracherkenner 9 erkennt den Namen, und das Erkennungsergebnis wird zum Abruf der assoziierten Rufnummer aus dem Rufnummernspeicher 8 für Namenwahl ausgelesen. Diese Nummer wird zur Ablaufsteuerung 10 geleitet, die für eine Umsetzung der gefundenen Nummer in ein Sprachsignal sorgt. Dazu werden die den Ziffern der Rufnummer entsprechenden Prompts aus dem Speicher 4 ausgelesen und über die Sprech- und Wähleinrichtung 2 über das Netz 1 an den fernen Nutzer gegeben. Für weitere Rufnummerabfragen kann der Nutzer per Spracheingabe diesen Ablauf beliebig oft wiederholen.

## Patentansprüche

1. Vorrichtung zur Fernabfrage individuell gespeicherter Rufnummern über ein Telefonnetz mit einer Sprech- und Wähleinrichtung (2) und daran angeschlossener Spracherkennungseinheit (9), welche vorbestimmte Schlüsselwörter gesprochener Sprache zu erkennen imstande ist, die mit weiteren, dem Schlüsselwort zugeordneten Daten in einem Speicher (8) abgelegt sind, wobei die Vorrichtung, kontrolliert durch eine Ablaufsteuerung (10), in Abhängigkeit vom erkannten Schlüsselwort Daten aus dem Speicher (8) zur Fernabfrage freigibt bzw. eine Abfrage der in dem Speicher (8) dem Schlüsselwort zugeordneten Daten vornimmt, wobei die mit dem Schlüsselwort assoziierten Daten vom Speicher (8) der Ablaufsteuerung (10) übergeben werden und die Vorrichtung weiterhin einen Sprachbausteinspeicher (4) aufweist, in welchem einzelnen Datenkomponenten, wie z.B. einzelnen Ziffern, zugeordnete Sprachelemente in Sprachprompts hinterlegt sind, wobei die Ablaufsteuerung (10) die Umwandlung der abgefragten Daten in ein Sprachsignal durch entsprechende Kombination der Sprachelemente veranlaßt und das Sprachsignal durch die Sprech- und Wähleinrichtung (2) über das Telefonnetz ausgegeben wird.

2. Vorrichtung nach Anspruch 1, dadurch gekennzeichnet,
daß die Ablaufsteuerung (10) eine akustische Benutzerführung mittels im Sprachbausteinspeicher (4) in Sprachprompts hinterlegter Sprachelemente vornimmt.

3. Vorrichtung nach einem der vorangegangenen Ansprüche, dadurch gekennzeichnet,
daß die Freigabe des Abfragewegs durch die Ablaufsteuerung (10) an die korrekte Eingabe eines gesprochenen oder mehrfrequenzcodierten PIN-Codes gebunden ist, welcher von einer PIN-Speicher- und Vergleichseinheit (11) analysiert wird.

4. Vorrichtung nach einem der vorangegangenen Ansprüche, dadurch gekennzeichnet,
daß die Schlüsselwörter Namen von Teilnehmern sind und im Speicher (8) mit der Rufnummer des entsprechenden Endgeräts abgelegt sind.

5. Vorrichtung nach einem der vorangegangenen Ansprüche, dadurch gekennzeichnet,
daß sie in ein Telefon, insbesondere in ein Telefon mit automatischer Sprachnamenwahl, implementiert ist.

6. Vorrichtung nach einem der Ansprüche 1 bis 4, dadurch gekennzeichnet,
daß sie in das Telefonnetz verlagert ist und von mehreren Benutzern genutzt werden kann, wobei jedem Benutzer ein Teil des Speichers (8) zum Anlegen eines individuellen Rufnummernspeichers einrichtbar ist..

7. Verfahren zur Fernabfrage individuell gespeicherter Rufnummern über ein Telefonnetz, wobei mittels einer Spracherkennungseinheit (9) aus einer Spracheingabe eines entfernten Benutzers Namen von Teilnehmern als vorbestimmte, benutzerdefinierte Schlüsselwörter erkannt und in digitale Information umgewandelt werden, mit dieser Information assoziierte Daten, die Rufnummern des Endgeräts des mit dem Namen assoziierten Teilnehmers, aus einem lokalen Speicher (8) entnommen, in ein Sprachsignal umgewandelt und dem entfernten Benutzer über das Telefonnetz akustisch übermittelt werden.

8. Verfahren nach Anspruch 7, dadurch gekennzeichnet,
daß das dem Benutzer übermittelte Sprachsignal aus einzelnen Elementen besteht, welche jeweils einer Ziffer entsprechen.
